Europäisches Patentamt

European Patent Office

Office européen des brevets

Veröffentlichungsnummer: **0 286 718**
**A2**

# EUROPÄISCHE PATENTANMELDUNG

Anmeldenummer: 87114394.7

Anmeldetag: 02.10.87

Int. Cl.⁴: **B29C 65/34 , B29C 67/18 , F16L 59/16 , H05B 3/58**

Priorität: **11.04.87 DE 3712355**

Veröffentlichungstag der Anmeldung:
**19.10.88 Patentblatt 88/42**

Benannte Vertragsstaaten:
**AT BE CH DE ES FR GB GR IT LI NL SE**

Anmelder: **KABELMETAL ELECTRO GMBH**
**Kabelkamp 20 Postfach 260**
**D-3000 Hannover 1(DE)**

Erfinder: **Friessner, Juergen, Dipl.-Ing.**
**Hirschdamm 11**
**D-3002 Wedemark 2(DE)**
Erfinder: **Szczepanek, Werner, Dipl.-Ing.**
**Hindemithweg 15**
**D-3203 Sarstedt(DE)**

**Band aus thermoplastischem Kunststoff zur Abdeckung einer Verbindungsstelle und Verfahren zu seiner Herstellung.**

Es wird ein Band aus thermoplastischem Kunststoff beschrieben, welches zur Adbeckung einer Verbindungsstelle von Leitungsrohren aus Kunststoff dienen soll. Für die Verschweißung des Kunststoffbandes im Bereich seiner Längsnaht und mit den Kunststoffrohrenden dient ein Heizleiter, welcher vollständig in die Oberfläche des Kunststoffbandes eingelassen ist.

EP 0 286 718 A2

# Band aus thermoplastischem Kunststoff zur Abdeckung einer Verbindungsstelle und Verfahren zu seiner Herstellung

Die Erfindung betrifft ein Band aus thermoplastischem Kunststoff zur Abdeckung einer Verbindungsstelle von Leitungsrohren aus Kunststoff, insbesondere wärmeisolierten Leitungsrohren, welche aus einem Mediumrohr, einer das Mediumrohr umgebenden Wärmeisolationsschicht sowie einem Außenrohr aus thermoplastischem Kunststoff bestehen, wobei das Kunststoffband auf den Enden des Außenrohres aufliegend um die Verbindungsstelle mit überlappenden Längskanten herumgelegt und im Bereich der überlappenden Längskanten und mit den Außenrohrenden mittels eines Heizleiters verschweißt ist.

Aus dem DE-GM 8204372 ist eine Muffenverbindung für Fernwärmeleitungen bekannt, bei dem die Verbindungsstelle durch ein Kunststoffband abgedeckt ist, welches durch elektrische Heizleiter sowohl an der Auflagefläche auf de Außenrohrenden als auch im Bereich seiner Überlappungsnaht verschweißt ist. Der Heizleiter ist entweder durch ein Klebeband oder durch Eintempern an der Oberfläche des Kunststoffbandes befestigt. Die Verwendung eines Klebebandes hat den Nachteil, daß eine Festlegung des Heizdrahtes an der Oberfläche des Kunststoffbandes insbesondere beim Herumlegen des Kunststoffbandes um die Verbindungsstelle nicht gewährleistet war. Der gleiche Nachteil gilt für den an der Oberfläche des Kunststoffbandes eingetemperten Heizleiter. Darüber hinaus weisen die beschriebenen Lösungen noch den Nachteil auf, daß vor Beginn des Schweißvorganges die zu verschweißenden Oberflächen durch einen Spalt getrennt waren, welcher zur Folge hatte, daß der Schweißvorgang recht lange dauerte. Die Ursache hierfür ist darin zu sehen, daß die durch den Heizleiter erzeugte Wärme zu Beginn des Schweißvorganges, d. h. bevor der Heizleiter in die Kunststoffoberfläche eingedrückt wurde, durch vorbeiströmende Luft von dem Heizleiter entfernt wurde. Darüber hinaus führte die langsame Erhitzung des Heizleiter an der Luft zu einer unerwünschten Oxidation der Oberfläche des Heizleiters. Ein weiterer wesentlicher Nachteil bestand darin, daß der an der Oberfläche des Kunststoffbandes befindliche Heizleiter durch mechanische Einwirkungen beim Transport beschädigt werden konnte.

Der vorliegenden Erfindung liegt die Aufgabe zu Grunde, ein Kunststoffband für den genannten Zweck anzugeben, welches einen schnelleren Schweißprozeß ermöglicht und den Heizleiter sowohl beim Transport der Kunststoffbänder als auch während des Schweißvorganges vor äußeren Einflüssen wie mechanische Beschädigung und Oxidation zu schützen.

Diese Aufgabe wird dadurch gelöst, daß gemäß der Erfindung ein oder mehrere Heizleiter vollständig in die Oberfläche des Kunststoffbandes eingelassen ist (sind). Da für die Aufbringung der erforderlichen Schweißenergie eine große Heizleiteroberfläche pro Flächeneinheit vorzusehen ist, können mehrere Heizleiter nebeneinander verlaufend vorgesehen sein oder aber im Falle eines einzigen Heizleiters muß dieser gesondert geformt sein. Nach einer besonders vorteilhaften Ausgestaltung der Erfindung wird als Heizleiter ein sinus-oder mäanderartig verlaufender Draht verwendet. Alternativ kann vorgesehen werden, daß als Heizleiter ein sinus-oder mäanderförmig ausgestanzter Blechstreifen verwendet wird. Dieser hat den Vorteil gegenüber einem runden Draht, daß eine Veränderung des Abstandes zwischen den einzelnen Mäanderwindungen und auch ein Herauswandern aus der Schweißnaht in längsaxialer Richtung nahezu ausgeschlossen ist. Wesentlich dabei ist, daß die Stanzbreite größer ist als die Wanddicke des Blechstreifens.

Die Erfindung betrifft weiterhin ein Verfahren zur Herstellung eines Bandes, welches sich dadurch kennzeichnet, daß auf die für die Verschweißung vorgesehenen Bereiche des Kunststoffbandes zumindest ein Heizleiter aufgelegt und der Heizleiter in erwärmtem Zustand in das Kunststoffband eingedrückt wird. Der Zeitpunkt des Aufwärmens des Heizleiters und des Eindrückens desselben ist abhängig von der angewendeten Verfahrenstechnik. Wesentlich ist, daß der Heizleiter auf eine Temperatur zwischen 120 °C und 200 °C erwärmt wird. Da ein vollständiges Einbetten des Heizleiters in das Kunststoffband nicht immer vollkommen gelingt, hat es sich als vorteilhaft erwiesen, daß der Heizleiter bzw. die Bereiche, in denen sich der Heizleiter befindet, durch eine dünne Kunststofffolie abgedeckt wird, die entweder auf dem Kunststoffband als Zusatzschweißwerkstoff verbleiben oder aber vor dem Verschweißen abgezogen werden kann. Mit besonderem Vorteil wird der Heizleiter durch Widerstandserwärmung aufgeheizt. Der Heizleiter kann in der vorgesehenen Form, d. h. in U-Form, auf die Oberfläche der Kunststoffplatte aufgelegt und anschließend eingepreßt werden. Es hat sich jedoch als vorteilhaft erwiesen, daß der Heizleiter auf die Kunststoffplatte kontinuierlich aufgelegt und mittels einer Walze in die Kunststoffplatte eingedrückt wird. Während des Auflegens kann der Heizleiter dann in Sinus-oder Mäanderform geformt werden. Bei diesem kontinuierlichen Verfahren ist es vorteilhaft, daß der Heizleiter durch die beheizbare Walze erwärmt wird.

Es ist zwar aus der DE-OS 3300943 bekannt, einen Heizleiter zu erwärmen und in ein Kunststoffband einzudrücken. Diese Technik dient jedoch dazu, ein elektrisch beheizbares Band herzustellen, welches anstelle des "nackten Heizleiter" in den Ringspalt zwischen dem Kunststoffband und den Außenrohrenden und den Längsspalt im Bereich der Überlappungsnaht eingebracht wird. Bei dieser Vorgehensweise treten die gleichen Nachteile wie eingangs erwähnt auf, da das so gebildete Heizband entweder an die Oberfläche des Kunststoffbandes angeheftet wurde oder aber man hatte zwei unterschiedliche erst auf der Montagestelle zu vereinigende Gegenstände.

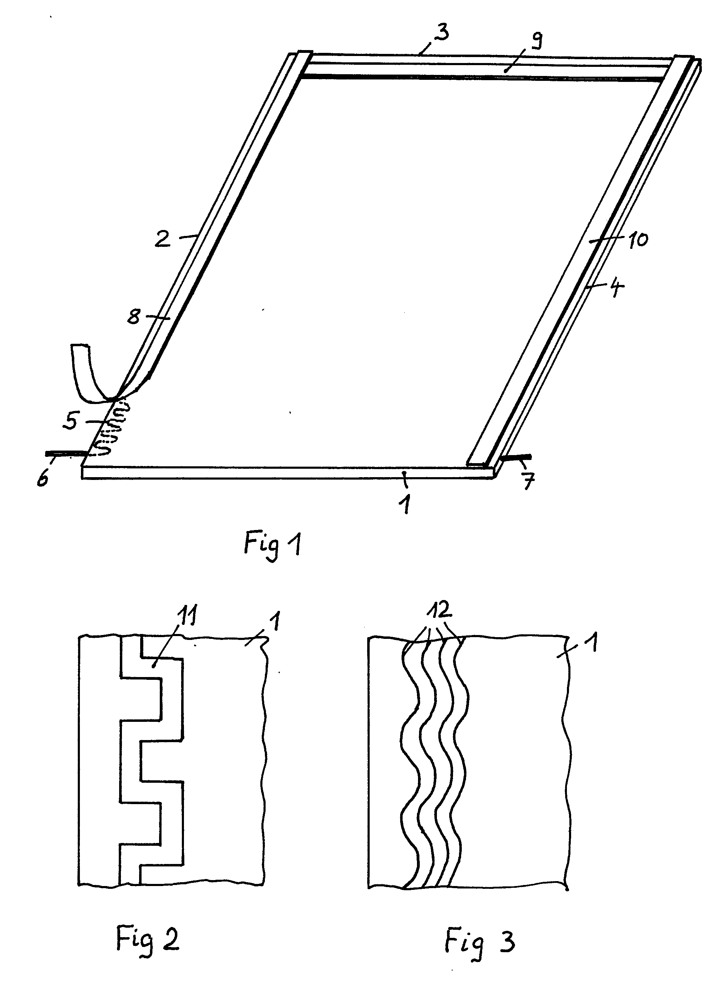

Die Erfindung ist anhand der in den Fig. 1 bis 5 schematisch dargestellten Ausführungsbeispiele näher erläutert.

In der Fig. 1 ist mit 1 ein Kunstsoffband aus Polyäthylen bezeichnet, welches, wie aus dem DE-GM 8204372 bekannt, in nicht dargestellter Weise um die Verbindungsstelle eines wärmeisolierten Leitungsrohres herumgelegt wird. In die Randbereiche 2, 3 und 4 ist ein mäanderartig geformter Kupferdraht 5 eingelassen, dessen Enden 6 und 7 seitlich des Kunststoffbandes 1 heraustreten und als Anschlußenden für eine Stromquelle dienen. Die Randbereiche 2 und 4 des Kunststoffbandes 1 liegen auf den Außenrohrenden auf, wogegen der Randbereich 3 die Überlappungsnaht bildet. Über dem mäanderartig geformten Kupferdraht 5 sind Klebebänder 8, 9 und 10 angeordnet, welche die zu verschweißenden Oberflächen und auch den Kupferdraht 5 vor Beschädigung und Korrosion bzw. Oxidation schützen sollen. Die Klebebänder 8, 9 und 10 werden zweckmäßigerweise vor dem Herumlegen des Kunststoffbandes 1 zwecks Formung der Muffe entfernt. Der Kupferdraht 5 ist nahezu vollständig in die Oberfläche des Kunststoffbandes 1 eingedrückt und somit nahezu vollständig von Kunststoffmaterial umgeben. Dies geschieht erfindungsgemäß dadurch, daß der auf ca. 200 °C erwärmte Kupferdraht 5 unter Zuhilfenahme von Druck in die Oberfläche des Kunststoffbandes 1 eingedrückt wird.

Die Fig. 2 und 3 zeigen weitere Ausgestaltungen des Heizleiters, wobei die Fig. 2 ein mäanderartig ausgestanztes Kupferblech 11 zeigt, wogegen in der Fig. 3 der Heizleiter durch eine Vielzahl von sinusförmig gebogenen Kupferdrähten 12 gebildet wird.

Das erfindungsgemäße Verfahren soll anhand der Fig. 4 näher beschrieben werden.

Das Kunststoffband 1 wird auf einer nicht näher bezeichneten Unterlage festgelegt. Mittels einer Verlegevorrichtung aus einer hin und her - schwenkbaren Düse 13 wird der Kupferdraht 5, welcher von einer Vorratsspule 14 abgezogen wird, zu einem Mäander geformt und auf die Oberfläche des Kunststoffbandes 1 aufgelegt. Eine nachlaufende Rolle oder Walze 15, welche beheizt ist, heizt den mäanderartig geformten Kupferdraht 5 und preßt ihn in die Oberfläche des Kunststoffbandes 1 ein. Die Düse 13, die Vorratsrolle 14 und die Walze 15 werden entlang der Längskanten 4, 3 und 2 entlanggeführt. Die Düse 13, die Vorratsrolle 14 und die Walze 15 sind zweckmäßigerweise in nicht dargestellter Weise an einer sogenannten Brücke befestigt, welche sich steuerbar in jeder beliebigen Richtung verfahren läßt. Auf diese Weise können beliebig große Kunststoffplatten 1 mit dem Heizleiter 5 belegt werden, wobei die Form des Mäanders ebenfalls veränderbar ist.

Mit der gleichen Vorrichtung lassen sich selbstredend auch die in der Fig. 3 dargestellten einzelnen Heizleiter 12 aufbringen. Die Erwärmung des Heizleiters 5 läßt sich auch auf andere Weise bewerkstelligen, z. B. durch Widerstandserwärmung oder mittels Induktion oder auch mit einer Flamme oder einem Heißluftgebläse.

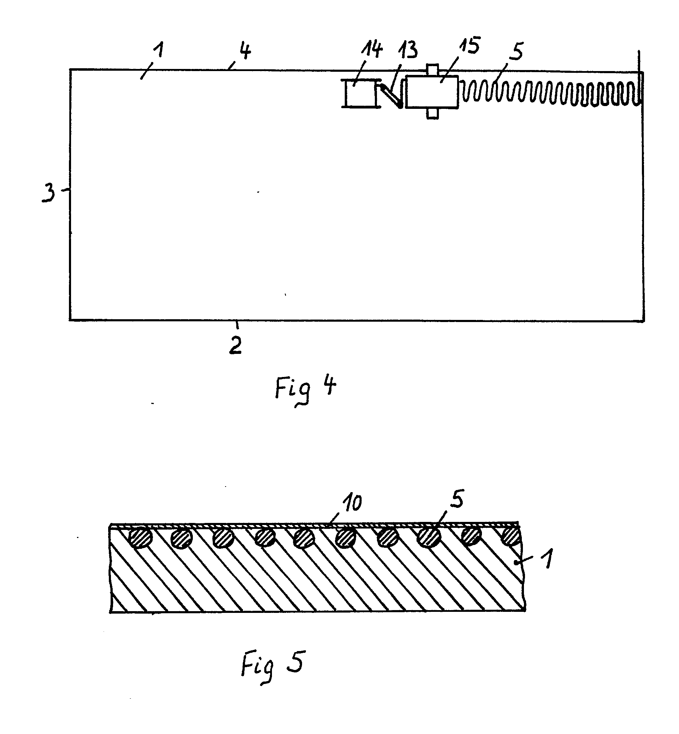

In der Fig. 5 ist ein Schnitt durch eine Kunststoffplatte 1 im Bereich der Längskante 4 dargestellt. Hier ist deutlich zu erkennen, daß der Kupferdraht 5 nahezu vollständig in Kunststoffmaterial eingebettet ist. Die Abdeckung der Schweißfläche erfolgt, wie in der Fig.1 dargestellt, mittels eines Kunststoffklebestreifens 10.

## Ansprüche

1. Band aus thermoplastischem Kunststoff zur Abdeckung einer Verbindungsstelle von Leitungsrohren aus Kunststoff, insbesondere von wärmeisolierten Leitungsrohren, welche aus einem Mediumrohr ein das Mediumrohr umgebenden Wärmeisolationsschicht sowie einem Außenrohr aus thermoplastischem Kunststoff bestehen, wobei das Kunststoffband auf den Enden des Außenrohres aufliegend um die Verbindungsstelle mit überlappenden Längskanten herumgelegt und im Bereich der überlappenden Längskanten und mit den Außenrohrenden mittels eines Heizleiters verschweißt ist, dadurch gekennzeichnet, daß ein oder mehrere Heizleiter (5,11,12) vollständig in die Oberfläche des Kunststoffbandes (1) eingelassen ist (sind).

2. Band nach Anspruch 1, dadurch gekennzeichnet, daß als Heizleiter ein sinus-bzw. mäanderartig verlaufender Draht (5,12) verwendet ist.

3. Band nach Anspruch 1, dadurch gekennzeichnet, daß als Heizleiter ein sinus-oder mäanderartig geformter ausgestanzter Blechstreifen (11) verwendet ist

4. Verfahren zum Herstellen eines Bandes nach Anspruch 1 oder einem der folgenden, dadurch gekennzeichnet, daß auf die für die Verschweißung vorgesehenen ßereiche des Kunststoffbandes zumindest ein Heizleiter aufgelegt und der Heizleiter in erwärmtem Zustand in das Kunststoffband eingedrückt wird.

5. Verfahren nach Anspruch 4, dadurch gekennzeichnet, daß der Heizleiter vor dem Auflegen erwärmt wird.

6. Verfahren nach Anspruch 4, dadurch gekennzeichnet, daß der Heizleiter nach dem Aufbringen des Drucks erwärmt wird.

7. Verfahren nach Anspruch 4 oder einem der folgenden, dadurch gekennzeichnet, daß der Heizleiter auf eine Temperatur zwischen 120 °C und 200 °C erwärmt wird.

8. Verfahren nach Anspruch 4 oder einem der folgenden, dadurch gekennzeichnet, daß der Heizleiter durch eine dünne Kunststoffolie abgedeckt wird.

9. Verfahren nach Anspruch 4 oder einem der folgenden, dadurch gekennzeichnet, daß der Heizleiter durch Widerstandserwärmung aufgeheizt wird.

10. Verfahren nach Anspruch 4 oder einem der folgenden, dadurch gekennzeichnet, daß der Heizleiter auf die Kunststoffplatte aufgelegt und mittels einer Walze in die Kunststoffplatte eingedrückt wird.

11. Verfahren nach Anspruch 10, dadurch gekennzeichnet, daß der Heizleiter durch die beheizbare Walze erwärmt wird.

Fig 1

Fig 2

Fig 3

0 286 718

Fig 4

Fig 5